# EUROPEAN PATENT APPLICATION

(11) **EP 3 522 544 A1**
(43) Date of publication of application: **07.08.2019**
(21) Application number: 19154357.8
(22) Date of filing: 29.01.2019
(51) Int. Cl.: H04N 21/414, G06T 7/00, H04N 17/00, H04N 21/44, H04N 21/647, H04N 21/442

(54) **ESTIMATING VIDEO QUALITY OF EXPERIENCE**

(30) Priority: 31.01.2018 US 201815884857
(71) Applicant: Hewlett Packard Enterprise Development LP, Houston, TX 77070 (US)
(72) Inventor: DASARI, Mallesham, Palo Alto, CA California 94304-1112 (US); SANADHYA, Shruti, Palo Alto, CA California 94304-1112 (US); VLACHOU, Christina, Palo Alto, CA California 94304-1112 (US); KIM, Kyu-Han, Palo Alto, CA California 94304-1112 (US)
(74) Representative: Haseltine Lake Kempner LLP

(57) **Abstract**

In some examples, a non-transitory machine-readable storage medium having stored thereon machine-readable instructions to cause a processing resource to determine a intra coded bitrate of a captured video, determine a stutter ratio of the captured video, and estimate a video quality of experience based on the intra coded bitrate and the stutter ratio of the captured video.

## Description

### Background

Over the past decade, mobile video traffic has increased dramatically. This may be due to proliferation of a number of interactive as well as non-interactive mobile video applications. These applications can be categorized into Video Telephony, Streaming, and Virtual Reality and Augmented Reality streaming.

### Brief Description of the Drawings

Figure 1 illustrates an example of a system for estimating video quality of experience consistent with the disclosure.
Figure 2 illustrates an example of a device for estimating video quality of experience consistent with the disclosure.
Figure 3 illustrates an example of a method for estimating video quality of experience consistent with the disclosure.

### Detailed Description

Various examples provide for estimating video quality of experience. Quality of Experience (QoE) can be a measure of the overall level of customer satisfaction with a video streaming service. Estimating the video QoE can include inputting metrics into a QoE model, where the QoE model can calculate the video QoE of mobile video telephony. A device can record the screen of a client device during a video call and evaluate the video QoE by computing blocking, blurring, and temporal variation in the captured video. However, each of these metrics has limitations. For example, some applications do not show blocking artefacts. Additionally, blocking does not play a role in user experience, which may be a result of the rare occurrence of blocking. Furthermore, the blur and the temporal variation metric can be sensitive to the level of movement and content of the captured video.

Accordingly, the disclosure is directed to estimating video quality experience. Estimating video QoE as disclosed herein may include calculating a QoE value by inputting video quality metrics into a QoE model. For instance, a system for estimating video QoE can include determining an intra coded bitrate of a captured video, determining a stutter ratio of the captured video, and estimating a video quality of experience based on the intra coded bitrate and the stutter ratio of the captured video.

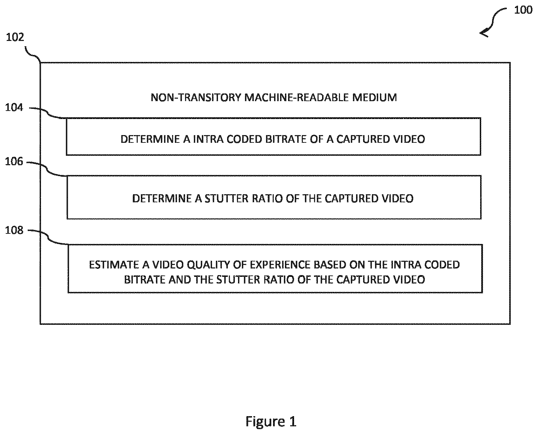

Figure 1 illustrates an example system 100 for estimating video quality of experience consistent with the disclosure. System 100 can include a non-transitory machine readable storage medium 102. Non-transitory machine readable storage medium 102 can be an electronic, magnetic, optical, or other physical storage device that stores executable instructions. Thus, non-transitory machine readable storage medium 102 may be, for example, Random Access Memory (RAM), an Electrically-Erasable Programmable Read-Only Memory (EEPROM), a storage drive, an optical disc, and the like. In this example, the executable instructions may be "installed" on the system 100. Additionally and/or alternatively, non-transitory machine readable storage medium 102 may be a portable, external or remote storage medium, for example, that allows system 100 to download the instructions from the portable/external/remote storage medium. In this situation, the executable instructions can be part of an "installation package".

Instructions 104 can include instructions executable to determine an intra coded bitrate of a captured video. A video can be displayed on a display of a client device. As used herein, a client device can, for example, refer to a device including a processor, memory, and input/output interfaces for wired and/or wireless communication. A client device may include a laptop computer, a desktop computer, a mobile device, and/or other wireless devices, although examples of the disclosure are not limited to such devices. A mobile device may refer to devices that are (or may be) carried and/or worn by a user. For instance, a mobile device can be a phone (e.g., a smart phone), a tablet, a personal digital assistant (PDA), and/or a wrist worn device (e.g., a smart watch), among other types of mobile devices. As used herein, a display may include, for example, a monitor, a screen, or the like.

The video displayed on the client device can be captured by a computing device. In some examples, the computing device can record the video displayed on the client device. As used herein, a computing device can, for example, refer to a device including a processor, memory, and input/output interfaces for wired and/or wireless communication. A computing device can include a recording device, although examples of the disclosure are not limited to such devices.

During a video telephony call, a user can experience a number of aberrations in the video quality, for example, stutter, blurriness, and blocking. Video telephony is real-time audio-visual communication between or among client device users. Aberrations in the video quality can result in a decreased video QoE.

Stutter may be a temporal disruption in a video. In some examples, stutter may occur as a result of loss, where some frames or blocks are lost. In other examples, stutter may occur as a result of delay, where frames are dropped because the frames are decoded too late to display or received late due to a delay during the frame transmission. For example, a user may experience stutter when an incoming video stalls abruptly and a single frame is displayed for a long duration on the screen of the client device. Additionally, stutter may appear as a fast play of the video, where the decoder can attempt to recover from frame losses by playing separate frames in quick succession, creating a perception of "fast" movement.

Blurriness can occur when an encoder uses a quantization parameter (QP) during transform coding. A QP may refer to an index used to derive a scaling matrix and can range from 0 to 51. In some examples, increased blurriness can increase as the QP increases. Servers can use adaptive encoding based on network conditions. In adaptive encoding, a server tries to adjust the QP to minimize bitrate in poor network conditions, which degrades the quality of encoded frames. Another way to describe this is that loss of high frequency information in the image can make the image appear blurry or have a low resolution. An increased QP can reduce the magnitude of an increased frequency Discrete Cosine Transform (DCT) coefficients almost down to zero, consequently losing the information and making it difficult to extract original DCT coefficients at the time of de-quantization. A DCT can represent an image as a sum of sinusoids of varying magnitudes and frequencies.

The blocking metric can capture the loss of blocks due to an increased network packet loss. The decoder can introduce visual impairments at the block boundaries or an original block can be replaced by a different block as a result of a presentation timestamp elapsing.

Determining an intra coded bitrate of a captured video can include capturing video blur with encoding a bitrate by compressing the captured video. As the blurriness of a video increases, the compression of the video can increase. However, the block movement for high motion videos is greater than the block movement for low motion videos, which can result in different encoding bitrates. Thus, determining the intra coded bitrate can include disabling an inter frame prediction while compressing the captured video. An encoder can use different macroblock prediction modes for luminance (luma) and chroma, where luma is a brightness component of the captured video and chroma is a color component of the captured video. A matching candidate macroblock can be selected based on the sum of absolute difference (SAD) of a current and a previous coded macroblock from the same image. The candidate macroblock can be subtracted from the current block to for a residual for additional steps of coding, such as transform and entropy coding.

Instructions 106 can include instructions executable to determine a stutter ratio of the captured video. As described herein, the video displayed on the interface of the client device can be captured by a computing device. Determining the stutter ratio of the captured video can include using, for example, an Ffmpeg's mpdecimate filter, to calculate the stutter ratio. A filter can divide a current and previous frame in 8x8 block pixels and compute the SAD of each block.

A set of thresholds can be used to determine if the frames are duplicates. The thresholds can include hi, lo, and frac. For example, the thresholds hi and lo can represent 8x8 pixel differences. Thus, a threshold of 64 can mean one unit of difference for each pixel. A frame can be considered to be a duplicate frame if none of the 8x8 boxes gives SAD greater than a threshold of hi, and if no more than frac blocks change by more than the lo threshold value. A stutter ratio can vary across different videos under a good network condition, while the stutter ratio can be consistent under a poor network condition. Network conditions can refer to end-to-end metrics, where end-to-end metrics can include monitoring the metrics during the entire transmission of the application. In some examples, the good network condition can include at least a rate of 10 megabits per second (Mbps) and less than a 100 millisecond (ms) delay. The poor network condition can include a rate of 1 Mbps, up to a delay of 500 ms, and/or a loss rate of between 20 percent and 80 percent.

Instructions 108 can include instructions executable to estimate a video quality of experience based on the intra coded bitrate and the stutter ratio of the captured video. Estimating a video quality based on the intra coded bitrate and the stutter ratio of the captured video can include inputting the intra coded bitrate data and stutter ratio into a QoE prediction model. A QoE prediction model can output a QoE value based on input metrics, which can include the intra coded bitrate data and the stutter ratio data, to predict the QoE. For example, the determined intra coded bitrate value and the stutter ratio value, which are complementary video quality metrics can be input into the QoE model. The intra coded bitrate and the stutter are video quality metrics, so each are metrics which are agnostic to the movement and the content of the captured video. Rather, the intra coded bitrate and the stutter ratio are dependent on the quality of the video, rather than the content of the video.

The QoE prediction model can calculate a QoE value based on the input video quality metrics. Thus, the QoE prediction model can calculate a single output value that predicts the QoE of a video based on a number of input values, where the input values are metrics that can measure the quality of the captured value. As described herein, the video quality metrics can include the intra coded bitrate and the stutter ratio. The intra coded bitrate can capture spatial artifacts of the captured video, while the stutter ratio can capture temporal artifacts of the captured video.

Based on the inputted intra coded bitrate value and the stutter ratio value, the QoE prediction model can output a single QoE value. The QoE value can be displayed on a display of the computing device. The display may include, for example, a monitor, a screen, or the like. Based on the QoE value the intra coded bitrate and/or the stutter ratio can be adjusted to increase the QoE.

In some examples, based on the predicted QoE value, the user can estimate how healthy a network is. If the network condition for the video telephony performance is classified as good, based on the predicted QoE value, then no action may be required. If the network condition for the video telephony performance is classified as poor, based on the predicted QoE value, then a controller can monitor the local network statistics to identify whether there is an issue within the local WLAN network. The controller can be a computing device such as a wireless local area network (WLAN) controller that is configured to manage access points. An access point can be a networking device that allows a client device to connect to a wired or wireless network. If there is an issue within the local network, the controller can update network configurations or move the client to an access point that can improve QoE. If the issue is not within the local network, the controller can maintain long-term statistics for the QoE in different applications and understand user dynamics and the user may adjust the application metrics to improve the QoE.

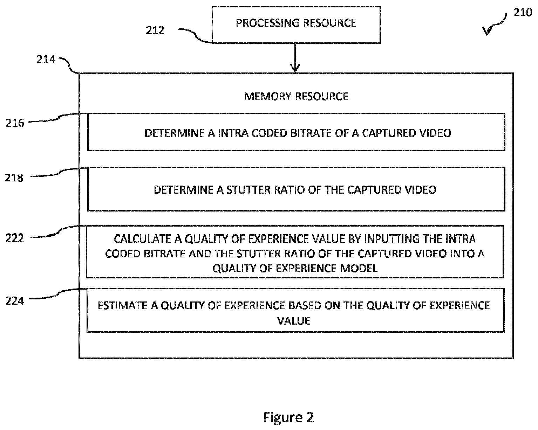

Figure 2 illustrates an example of a device 210 for estimating video quality of experience consistent with the disclosure. As illustrated in Figure 2, the system 210 can include a processing resource 212 coupled to the memory resource 214, on which instructions may be stored, such as instructions 216, 218, 222, and 224. Although the following descriptions refer to an individual processing resource and an individual memory resource, the descriptions may also apply to a system with multiple processing resources and multiple memory resources. In such examples, the instructions may be distributed (e.g., stored) across multiple processing resources.

Processing resource 212 may be a central processing unit (CPU), a semiconductor based microprocessor, and/or other hardware devices suitable for retrieval and execution of instructions stored in memory resource 214. Processing resource 212 may fetch, decode, and execute instructions 216, 218, 222, and 224, or a combination thereof. As an alternative or in addition to retrieving and executing instructions, processing resource 212 may include an electronic circuit that includes electronic components for performing the functionality of instructions 216, 218, 222, and 224, or combination thereof.

Memory resource 214 can be volatile or nonvolatile memory. Memory resource 214 can be removable (e.g., portable) memory, or non-removable (e.g., internal) memory. For example, memory resource 214 can be random access memory (RAM) (e.g., dynamic random access memory (DRAM) and/or phase change random access memory (PCRAM)), read-only memory (ROM) (e.g., electronically erasable programmable read-only memory (EEPROM) and/or compact-disk read-only memory (CR-ROM), flash memory, a laser disc, a digital versatile disk (DVD) or other optical disk storage, and/or a magnetic medium such as magnetic cassettes, tapes, or disks, among other types of memory.

Instructions 216, when executed by processing resource 212, can cause memory resource 214 to determine an intra coded bitrate of a captured video. A video can be displayed on a display of a client device, such as a mobile device. A mobile device can be a phone (e.g., a smart phone), a tablet, a personal digital assistant (PDA), and/or a wrist worn device (e.g., a smart watch), among other types of mobile devices. The video displayed on the client device can be captured by a computing device, such as a recording device.

As described herein, during a video telephony call, a user can experience a number of aberrations in the video quality, for example, stutter, blurriness, and blocking. These aberrations in the video quality can result in a decreased video QoE. Stutter is a temporal disruption in a video. In some examples, stutter may occur as a result of loss, where some frames or blocks are lost. In other examples, stutter may occur as a result of delay, where frames are dropped because the frames are decoded too late to display. Blurriness can occur when an encoder uses a quantization parameter (QP) during transform coding. Servers can use adaptive encoding based on network conditions. In adaptive encoding, server tries to adjust the QP to minimize bitrate in poor network conditions, which degrades the quality of encoded frame. Another way to describe this is that loss of high frequency information in the image can make the image appear blurry or have a low resolution. Blocking can capture the loss of blocks due to high network packet loss. The decoder can introduce visual impairments at the block boundaries or an original block can be replaced by a different block as a result of a presentation timestamp elapsing.

Determining an intra coded bitrate of a captured video can include capturing video blur with encoding a bitrate by compressing the captured video. As the blurriness of a video increases, the compression of the video can increase. However, the block movement for high motion videos can be greater than the block movement for low motion videos, which can result in different encoding bitrates. Thus, determining the intra coded bitrate can include disabling an inter frame prediction while compressing the captured video. An encoder can use different macroblock prediction modes for luma and chroma, where luma is a brightness component of the captured video and chroma is a color component of the captured video. A matching candidate macroblock can be selected based on the SAD of a current and a previous coded macroblock from the same image. The candidate macroblock can be subtracted from the current block to for a residual for additional steps of coding, such as transform and entropy coding.

Instructions 218, when executed by processing resource 212, can cause memory resource 214 to determine a stutter ratio of the captured video. As described herein, the video displayed on the interface of the client device can be captured by a computing device. Determining the stutter ratio of the captured video can include using an Ffmpeg's mpdecimate filter to calculate the stutter ratio. A filter can divide a current and previous frame in 8x8 block pixels and compute the SAD of each block.

A set of thresholds can be used to determine if the frames are duplicates. The thresholds can include hi, lo, and frac. For example, the thresholds hi and lo can represent number 8x8 pixel differences. Thus, a threshold of 64 can mean one unit of difference for each pixel. A frame can be considered to be a duplicate frame if none of the 8x8 boxes gives SAD greater than a threshold of hi, and if no more than frac blocks change by more than the lo threshold value. A stutter ratio can vary across different videos under a good network condition, while the stutter ratio can be consistent under a poor network condition. In some examples, the good network condition can include at least a rate of 10 Mbps and less than a delay of 100 ms. The poor network condition can include a rate of 1 Mbps, up to a delay of 500 ms, and/or a loss rate of between 20 percent and 80 percent.

Instructions 222, when executed by processing resource 212, can cause memory resource 214 to calculate a quality of experience value by inputting the intra coded bitrate and the stutter ratio of the captured video into a quality of experience model. Calculating a video quality of experience based on the intra coded bitrate and the stutter ratio of the captured video can include inputting the intra coded bitrate data and stutter ratio into a QoE prediction model. A QoE prediction model can calculate a QoE value based on input metrics, which can include the intra coded bitrate data and the stutter ratio data, to predict the QoE. For example, the determined intra coded bitrate value and the stutter ratio value, which are complementary video quality metrics can be input into the QoE model. The intra coded bitrate and the stutter are video quality metrics, so each are metrics which are agnostic to the movement and the content of the captured video. Rather, the intra coded bitrate and the stutter ratio are dependent on the quality of the video, rather than the content of the video.

Instructions 224, when executed by processing resource 212, can cause memory resource 214 to estimate a quality of experience based on the quality of experience value. The QoE prediction model can output a QoE value based on the input video quality metrics. Thus, the QoE prediction model can output a single output value that predicts the QoE of a video based on a number of input values, where the input values can include the intra coded bitrate and the stutter ratio. The outputted QoE value can be displayed on a display of the computing device. The display may include, for example, a monitor, a screen, or the like. Based on the QoE value the intra coded bitrate and/or the stutter ratio can be adjusted to increase the QoE.

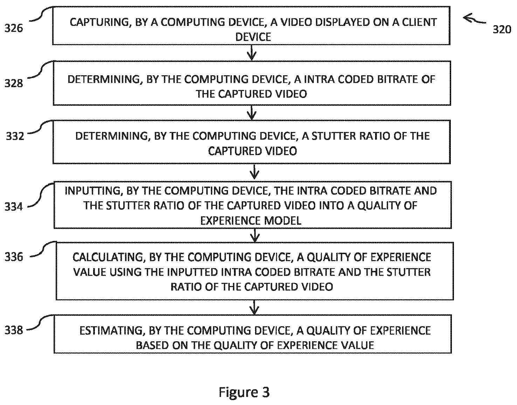

Figure 3 illustrates an example of method 320 for maintenance intervention predicting consistent with the disclosure.

At 326, the method 320 can include capturing, by a computing device, a video displayed on a client device. As described herein, a video can be displayed on a display of a client device, such as a mobile device. The video displayed on the client device can be captured by a computing device, such as a recording device. The video can be displayed on a display of the client device. During a video telephony call, a user can experience a number of aberrations in the video quality, for example, stutter, blurriness, and blocking. Video telephony is real-time audio-visual communication between or among client device users. Aberrations in the video quality can result in a decreased video QoE.

At 328, the method 320 can include determining, by the computing device, a intra coded bitrate of the captured video. As described herein, determining an intra coded bitrate of a captured video can include capturing video blur with encoding a bitrate by compressing the captured video. As the blurriness of a video increases, the compression of the video can increase. However, the block movement for high motion videos can be greater than the block movement for low motion videos, which can result in different encoding bitrates. Thus, determining the intra coded bitrate can include disabling an inter frame prediction while compressing the captured video. An encoder can use different macroblock prediction modes for luma and chroma, where luma is a brightness component of the captured video and chroma is a color component of the captured video. A matching candidate macroblock can be selected based on the SAD of a current and a previous coded macroblock from the same image. The candidate macroblock can be subtracted from the current block to for a residual for additional steps of coding, such as transform and entropy coding.

At 332, the method 320 can include determining, by the computing device, a stutter ratio of the captured video. As described herein, determining the stutter ratio of the captured video can include using an Ffmpeg's mpdecimate filter to calculate the stutter ratio. A filter can divide a current and previous frame in 8x8 block pixels and compute the SAD of each block.

A set of thresholds can be used to determine if the frames are duplicates. The thresholds can include hi, lo, and frac. For example, the thresholds hi and lo can represent number 8x8 pixel differences. Thus, a threshold of 64 can mean one unit of difference for each pixel. A frame can be considered to be a duplicate frame if none of the 8x8 boxes gives SAD greater than a threshold of hi, and if no more than frac blocks change by more than the lo threshold value. A stutter ratio can vary across different videos under a good network condition, while the stutter ratio can be consistent under a poor network condition. In some examples, the good network condition can include at least a rate of 10 Mbps and less than a 100 ms delay. The poor network condition can include a rate of 1 Mbps, up to a delay of 500 ms, and/or a loss rate of between 20 percent and 80 percent.

At 334, the method 320 can include inputting, by the computing device, the intra coded bitrate and the stutter ratio of the captured video into a quality of experience model. As described herein, the QoE predicting model can output a QoE value based on input metrics, which can include the intra coded bitrate data and the stutter ratio data, to predict the QoE. Thus, the QoE predicting model output a single value that represents the QoE of the captured value based on at least two complementary input video quality metrics.

At 336, the method 320 can include calculating, by the computing device, a quality of experience value using the inputted intra coded bitrate and the stutter ratio of the captured video. As described herein, the QoE prediction model can calculate a QoE value based on the input video quality metrics. Thus, the QoE prediction model can calculate a single output value that predicts the QoE of a video based on a number of input values, where the input values are metrics that can measure the quality of the captured value. As described herein, the video quality metrics can include the intra coded bitrate and the stutter ratio. The intra coded bitrate can capture spatial artifacts of the captured video, while the stutter ratio can capture temporal artifacts of the captured video.

At 338, the method 320 can include estimating, by computing device, a quality of experience based on the quality of experience value. As described herein, based on the inputted intra coded bitrate value and the stutter ratio value, the QoE prediction model can output a single QoE value. The QoE value can be displayed on a display of the computing device. The display may include, for example, a monitor, a screen, or the like. Based on the QoE value the intra coded bitrate and/or the stutter ratio can be adjusted to increase the QoE.

In the foregoing detailed description of the disclosure, reference is made to the accompanying drawings that form a part hereof, and in which is shown by way of illustration how examples of the disclosure may be practiced. These examples are described in sufficient detail to allow those of ordinary skill in the art to practice the examples of this disclosure, and it is to be understood that other examples may be utilized and that process, electrical, and/or structural changes may be made without departing from the scope of the present disclosure.

The figures herein follow a numbering convention in which the first digit corresponds to the drawing figure number and the remaining digits identify an element or component in the drawing. Elements shown in the various figures herein may be capable of being added, exchanged, and/or eliminated so as to provide a number of additional examples of the disclosure. In addition, the proportion and the relative scale of the elements provided in the figures are intended to illustrate the examples of the disclosure, and should not be taken in a limiting sense.

## Claims

1. A non-transitory machine-readable storage medium having stored thereon machine-readable instructions to cause a processing resource to:
determine a intra coded bitrate of a captured video;
determine a stutter ratio of the captured video; and
estimate a video quality of experience based on the intra coded bitrate and the stutter ratio of the captured video.

2. The medium of claim 1, wherein the instructions are executable to capture a video displayed on a client device and wherein, optionally, the client device is a mobile device.

3. The medium of claim 1, wherein the instructions are executable to calculate a quality of experience value wherein calculating the quality of experience value optionally includes inputting the intra coded bitrate and the stutter ratio of the captured video into a quality of experience model.

4. The medium of claim 1, wherein the intra coded bitrate and the stutter ratio of the captured video are complementary metrics.

5. The medium of claim 1, wherein the intra coded bitrate and the stutter ratio are agnostic to movement and content of the captured video.

6. The medium of claim 1, wherein the quality of experience value is an output based on the input of the intra coded bitrate and the stutter ratio.

7. The medium of claim 1, wherein the quality of experience is based on a quality of experience value.

8. A computing device, comprising:
a processing resource; and
a memory resource storing machine-readable instructions to cause the processing resource to:
determine a intra coded bitrate of a captured video;
determine a stutter ratio of the captured video;
calculate a quality of experience value by inputting the intra coded bitrate and the stutter ratio of the captured video into a quality of experience model; and
estimate a quality of experience based on the quality of experience value.

9. The device of claim 8, wherein the intra coded bitrate and the stutter ratio are video quality metrics.

10. The device of claim 8, wherein the quality of experience model: outputs a quality of experience value based on the input of the intra coded bitrate and the stutter ratio and/or calculates a single output value based on at least two video quality metrics.

11. The device of claim 9, wherein the intra coded bitrate captures spatial artifacts of the captured video
and/or the stutter ratio captures temporal artifacts of the captured video.

12. A method, comprising:
capturing, by a computing device, a video displayed on a client device;
determining, by the computing device, a intra coded bitrate of the captured video;
determining, by the computing device, a stutter ratio of the captured video;
inputting, by the computing device, the intra coded bitrate and the stutter ratio of the captured video into a quality of experience model;
calculating, by the computing device, a quality of experience value using the inputted intra coded bitrate and the stutter ratio of the captured video; and
estimating, by the computing device, a quality of experience based on the quality of experience value.

13. The method of claim 12, wherein capturing the video displayed on the computing device includes encoding the captured video and wherein, optionally, encoding the captured video includes frame predicting, transform coding, and entropy coding.

14. The method of claim 12, further comprising adjusting the intra coded bitrate and the stutter ratio to improve the quality of experience.

15. The method of claim 12, wherein the quality of experience model is an application-independent video quality of experience model.
